Europäisches Patentamt

European Patent Office

Office européen des brevets

(11) Publication number: **0 229 960**
A2

# EUROPEAN PATENT APPLICATION

(21) Application number: 86116972.0

(22) Date of filing: **06.12.86**

(51) Int. Cl.⁴: **G 01 F 23/28**

(30) Priority: **11.12.85 GB 8530512**
**11.12.85 GB 8530513**

(43) Date of publication of application: **29.07.87**
**Bulletin 87/31**

(84) Designated Contracting States: **DE FR GB IT NL**

(71) Applicant: **HONEYWELL LTD., Honeywell House Charles Square, Bracknell Berkshire RQ12 1EB (GB)**

(72) Inventor: **Turnbull, Francis William, 26 Strutherhill Larkhall, Lanarkshire Scotland (GB)**

(74) Representative: **Rentzsch, Heinz et al, Honeywell Europe S.A. Holding KG Patent- und Lizenzabteilung Kaiserleistrasse 55, D-6050 Offenbach am Main (DE)**

(54) **Liquid level sensor.**

(57) An optical liquid level sensor consists of a semiconductor light source (16) and a semiconductor light sensor (15) encapsulated in a common block (30) of transparent plastic material having the shape of a hemisphere (31) and provided with a threaded mounting portion (32, 33).

EP 0 229 960 A2

HONEYWELL LTD.                    December 5, 1986

Honeywell House                   60001017/21 EP

Charles Square                    HR/de

Bracknell Berkshire

RQ12 1EB England

LIQUID LEVEL SENSOR

The present invention relates to liquid level sensors. It is well known to sense the level of a liquid by means of an optical probe, comprising a transparent optical element, a light source, and a light sensor. Light from the light source passes into the optical element and is refracted therefrom into the liquid and dissipated if the element is immersed in the liquid but reflected back therin and detected by the light sensor if the element is not immersed in the liquid. This arrangement relies largely on the fact that much of the light undergoes total internal reflection in the optical element when the element is out of the liquid, but that the refractive index between the element and the liquid is much lower than that between the element and air and hence relatively little light is reflected when the element is immersed in the liquid.

Such probes have normally been constructed with the optical element in the form of a plastic rod (see CA-PS 630 191), mounted in a metal bushing so that the probe can be mounted in a tank. The rod has its end cut diagonally, typically as a cone, so that light passes down the rod, and is doubly reflected if the rod is in air but refracted out at the cone if the rod is in liquid. The light source and light sensor are mounted on a printed circuit board which holds them adjacent to the bushing end of the rod. Another embodiment of this type of liquid level sensor is shown in DE-OS 29 20 199, see in particular Fig. 3.

The object of the present invention is to provide a liquid level sensor of the optical probe type, which is more compact and of easier construction than the known probes.

According to the invention, the light source and the light sensor comprise respective semiconductor devices encapsulated in a block of transparent plastics material of predetermined shape and mounted on leads projecting from the encapsulating material. The resulting package forms a strong protective mounting for the light source and light sensor, holding them in a fixed relationship, and can be readily incorporated into a sensor assembly with an optical element. The sensor assembly preferably comprises a moulding of transparent plastics material, having a hemispherical portion and a threaded mounting portion, with an aperture shaped to receive the package at the appropriate position for co-operating with the hemispherical portion, the package preferably being bonded to the moulding by a transparent potting material.

It is a further object of the present invention to provide a liquid level sensor of the optical probe type, which has a more efficient optical design than the known probes.

According to the invention, the probe comprises an optical element of circular section having the light source and light sensor both mounted near the centre of the circle. The optical element may be a cylinder, with

- 3 -

the light source and light sensor both mounted on the axis of the cylinder. Preferably, however, the optical element is half a sphere, with the light source and light sensor both mounted near the centre of the sphere. This arrangement provides a focussing of the light from the light source onto the light sensor when the optical element is not immersed.

A liquid level sensor embodying the invention will now be described, by way of example, with reference to the drawings, in which:

Fig. 1 shows a blank leadframe;

Fig. 2 shows a complete package;

Fig. 3 is a longitudinal section through a liquid level sensor incorporating the package;

Fig. 4 is a circuit diagram of the package;

Fig. 5 shows a level sensor with a cylindrical element.

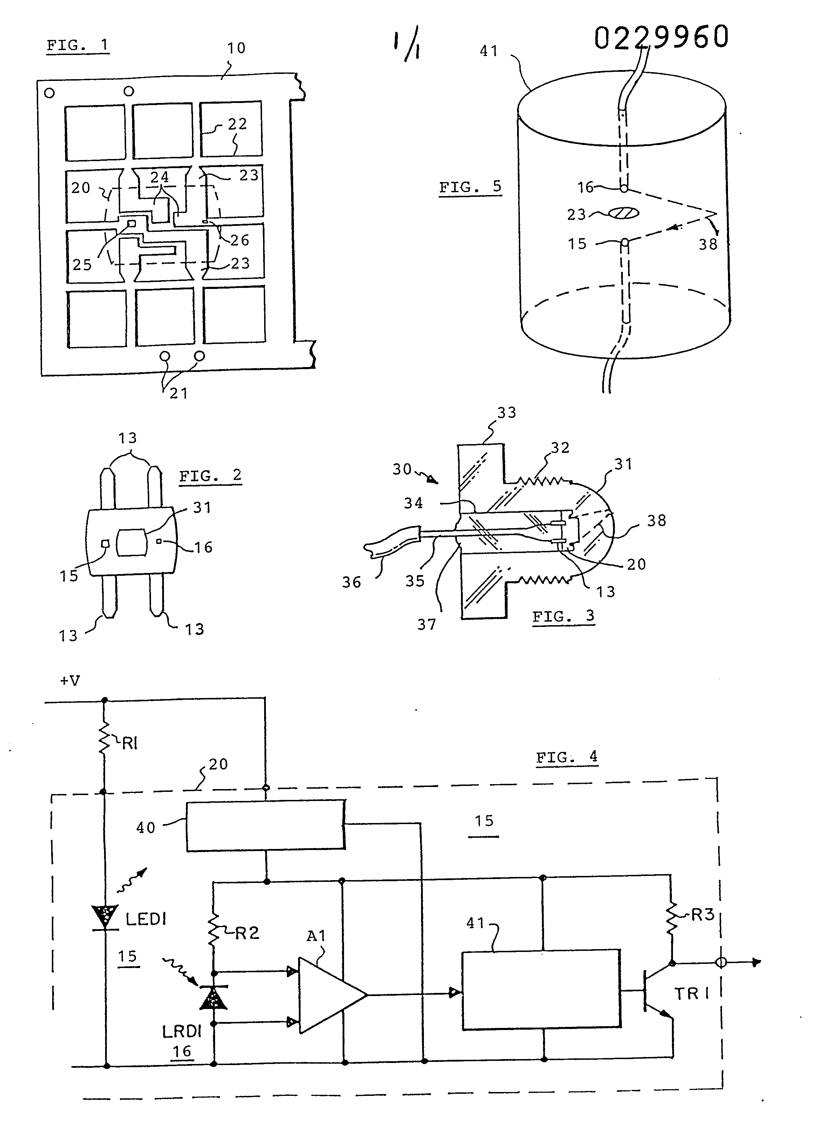

Referring to Fig. 1, a leadframe blank 10 with locating alignment holes 11 comprises a framework of leads 12 which are broadened to provide connection lugs 13 and formed as electrodes 14 in the central area. This blank may for example be formed by stamping from a thin sheet of suitable metal, and may consist of a strip of individual blanks. A light sensor chip 15 and a light emitter chip 16 are mounted on two of the electrodes 14, and attached to the other electrodes by means of thin wires (not shown). The assembly of electrodes and chips is then encapsulated by placing the blank in a mould and injecting transparent plastics material, which forms an encapsulation as indicated at 20.

The leads 12 are then broken off, leaving the encapsulated package as shown in Fig. 2. As shown, this has four leads 13, which are preferably bent back to lie at right angles to the plane of the electrodes 14 (which, for simplicity, are not shown in Fig. 2, although of course they will in fact be visible through the transparent plastics material). The encapsulation has a raised portion 21 as shown, to act as a locating element for the package.

Fig. 3 shows a liquid level sensor incorporating the package of Fig. 2. The sensor comprises basically a plastics moulding 30 and the package 20. The moulding 30 is of transparent plastics material, and has a hemispherical optical element 31, a screwed portion 32, a flange 33 (which is preferably formed as a nut), and a bore 34. The bore 34 is shaped so as to accomodate the package 20, which fits snugly at the right-hand end of the bore. The package 20 has connections made to its leads 13 by wires 35 of a cable 36, and is held in the bore by means of a transparent plastics potting material 37. The material 37 has a refractive index matching the refractive indexes of the package 20 and the moulding 30, so that the whole assembly is virtually uniform optically.

The hemispherical optical element shown in Fig. 3 operates such that light passes from the light source 15 to the sensor 16, as shown by rays 38, by means of internal reflection from the spherical surface. In liquid, there is little such reflection, most of the light passing into the liquid by refraction; in air, there is high internal reflection. The spherical surface, with the light source and light sensor placed on opposite sides of the centre of the sphere, gives good focussing of the light from the source to the sensor when the element is not in liquid.

Fig. 4 shows the circuitry of the package 20. The light emitter 16 is a light emitting diode LED1, connected in series with a current limiting and adjusting resistor R1. The chip 15 includes a voltage regulator 40 and light responsive diode LRD1 in series with a resistor R2 and feeding an operational amplifier A1, which feeds a Schmitt trigger circuit 41. The circuit 41 in turn feeds the base of a transistor TR1, from the collector resistor R3 of which the output is taken. The parts of the circuit in the package 20 are those between the small circles; the resistor R1 is external, to allow adjustment of the sensitivity.

Fig. 5 illustrates in simplified form a cylindrical sensor, comprising a transparent cylinder 41 of plastics material with a light source 16 and a light sensor 15 spaced along its axis. The source 16 and sensor 15 are embedded or potted in the cylinder 41, along with their leads. A light shield 23 prevents light from passing directly from the source 16 to the sensor 15. (Depending on the optics and the constructional details, the light shield may not be required.) However light rays such as ray 38 from the source 16 may be reflected to the sensor 15 at the surface of the cylinder 41. For a suitable axial spacing of the source 16 and sensor 15, the amount of light reaching the sensor from the source will be high when the cylinder is out of liquid (because of total internal reflection of the light), but low when it is in liquid (because of refraction of light out of the cylinder). The focussing effect of the cylinder ensures a low sensitivity to external light.

CLAIMS:

1. Optical liquid level sensor comprising a light source (16), a light sensor (15) and a light guiding member (31) which is to be exposed to the liquid, c h a r a c t e r i z e d   i n   t h a t   the light source (16) and the light sensor (15) comprise respective semiconductor devices encapsulated in a common block (30) of transparent plastics material of predetermined shape and are mounted on leads (13) projecting from the encapsulating material.

2. Liquid level sensor according to claim 1, c h a r a c t e r i z e d   i n   t h a t   the shape of the block (41) is cylindrical.

3. Liquid level sensor according to claim 1, c h a r a c t e r i z e d   i n   t h a t   the shape of the block (31) is hemispherical.

4. Liquid level sensor according to claim 1 or 3, c h a r a c t e r i z e d   i n   t h a t   the sensor assembly comprises a moulding (30) of transparent plastics material, having a hemispherical portion (31) and a threaded mounting portion (33) with an aperture (34) shaped to receive the package (20) including the light source (16), the light sensor (15) and the leads (13) at the appropriate position for co-operating with the hemispherical portion (31).

5. Liquid level sensor according to claim 4, c h a r a c t e r i z e d   i n   t h a t   the package (20) is bonded to the moulding (30) by a transparent potting material(37) having a refractive index matching the refractive indices of the package and moulding.

6. Liquid level sensor according to claim 4 or 5, c h a r a c t e r i z e d   i n   t h a t   the mounting portion (33) has a non-circular shape, preferably a hexagonal shape.

7. Liquid level sensor according to claim 5 or 6, c h a r a c t e r i z e d   i n   t h a t   the connecting wires (35) for the leads (13) are embedded into the potting material (37).

8. Liquid level sensor according to one of the claims 4 to 7, c h a r a c t e r i z e d   i n   t h a t the package (20) consists of two semiconductor chips (15,16) mounted on leads (13) of a framework (12) of leads.

9. Liquid level sensor according to one of the claims 2 to 8, c h a r a c t e r i z e d   i n   t h a t the light source (16) and the light sensor (15) are located near the centre of the hemisphere (31) or cylinder (41) respectively.

FIG. 1

FIG. 2

FIG. 3

FIG. 4

FIG. 5

0229960